# EUROPEAN PATENT APPLICATION

(11) **EP 2 765 821 A1**
(43) Date of publication of application: **13.08.2014**
(21) Application number: 12782127.0
(22) Date of filing: 01.02.2012
(51) Int. Cl.: H04W 76/02

(54) **MULTI-MODE TERMINAL SERVICE SWITCHOVER METHOD AND DEVICE**

(30) Priority: 12.10.2011 CN 201110307810
(71) Applicant: ZTE Corporation, Shenzhen, Guangdong 518057 (CN)
(72) Inventor: WANG, Chong, Shenzhen, Guangdong 518057 (CN); GAN, Huiliang, Shenzhen, Guangdong 518057 (CN); LI, Qingde, Shenzhen, Guangdong 518057 (CN)
(74) Representative: Mozzi, Matteo
(86) International application number: PCT/CN2012/070825
(87) International publication number: WO 2012/152094

(57) **Abstract**

Disclosed are a multi-mode terminal service switchover method and device. The method comprises: a multi-mode terminal performing data transmission for a Packet Switch (PS) service requested by a user through an activated packet data protocol PDP link; when detecting an available network in a current network environment, the multi-mode terminal activating a PDP link corresponding to the detected available network; and the multi-mode terminal performing data transmission for the PS service through one or more PDP links in the activated PDP links. Through the present invention, the problem that a multi-mode terminal cannot implement high speed data transmission for a PS service by using network resources of multiple communication networks is solved, and the effect of multi-network binding high speed data transmission for a PS service is achieved.

## Description

### Technical Field

The present invention relates to the field of communications, and particularly, to a method and apparatus for switching a service of a multi-mode terminal.

### Background

With the maturity of the 3rd Generation (3G) network construction, the continuous expansion of Wireless Local Area Network (WLAN) coverage, the establishment of a large area of Wireless Fidelity (WIFI) coverage hotspots, the constant completion of Long Term Evolution (LTE) network construction, as well as the growing popularity of intelligent terminals, users' focus has gradually shifted from the basic functionality to the colorful 3G services.

In view of a variety of coexisting mobile networks and the complex network environment, different mobile networks have different coverage. In the process of using a 3G terminal, it is easy to come across an environment where varieties of networks coexist or only a certain single mobile network exists. In this case, how to enable a multi-mode terminal to take full advantage of various mobile network resources, to allow the user to fully experience the high speed uploads and downloads of a Packet Switch (PS) service, and to ensure the continuity of uplink and downlink data transmission when the network environment changes in the process of moving is particularly important.

In the prior art, there are products which have achieved the simple superposition of Time Division (TD) and WIFI, but the WIFI module and the 3G module are independent of each other, there is no interoperability between the two modules, and no real integration is achieved. There are two mechanisms in the related technologies:
(1) One mechanism is to perform active detection and to complete switchover by first connecting and then disconnecting. If it is detected that a radio TD signal is relatively strong, the TD network is accessed when a data service is initiated. Afterwards, the WLAN signal is detected regularly, if the WLAN signal is not detected, the terminal enters a sleep mode regularly to save power. If it is detected in the process of moving that the WLAN signal enhances, the terminal switches to the WLAN network actively so that the traffic of the PS application service is forwarded via the WLAN network. If it is detected in the process of moving that the WLAN signal attenuates, a connection is initiated to the TD network in advance, and after the connection is established, the traffic of the upper-layer application service is switched to be transmitted and received by the TD network; at this moment, the WLAN signal is detected regularly, and if no WLAN signal is detected, the terminal still enters a sleep mode regularly. When the WLAN signal is detected again, the switchover is initiated actively, and the activated PS application service is transmitted and received via the WLAN connection.
(2) Another mechanism is dual standby passive switchover. The WLAN signal is detected regularly, and when there is the TD network only, the TD network is accessed to use TD data service. When it is detected that the WLAN signal is relatively strong, the WLAN is accessed automatically, and at the same time the TD connection enters a sleep mode but is not released. The terminal switches the data application activated by the user over so that the application can be transmitted and received by the WLAN network. If it is detected in the process of moving that the WLAN signal attenuates, the terminal activates the TD connection actively, obtains a wireless channel, and switches the data application over so that the data application can be transmitted and received by the TD network. When WLAN is detected again, the terminal accesses the WLAN network actively, switches the application service traffic over to the WLAN, makes the TD connection sleep, releases the TD radio resources, and still keeps the TD network connection.

The above-mentioned two mechanisms both conduct PS application service by using only one of the TD network and WLAN network, which, in an environment where a variety of communication networks coexist, cannot achieve seamless switchover of a PS service among different networks, cannot enable the user of the multi-mode terminal to take advantage of network resources of different networks at the same time to provide the user with high speed uploads and downloads of the PS service.

As regards the problem that the multi-mode terminal cannot simultaneously take advantage of network resources of different communication networks to realize the multi-network binding high speed data transmission for a PS service in the related technologies, there are no effective solutions coming up yet.

### Summary

As regards the problem that the multi-mode terminal cannot simultaneously take advantage of network resources of different communication networks to realize the multi-network binding high speed data transmission for a PS service in the related technologies, the present invention provides a method and apparatus for switching a service of a multi-mode terminal to at least solve the above-mentioned problem.

According to an aspect of the present invention, a method for switching a service of a multi-mode terminal is provided, including: a multi-mode terminal performing, via one activated Packet Data Protocol (PDP) link, data transmission for a Packet Switch (PS) service requested by a user; when detecting an available network in a current network environment, the multi-mode terminal activating a PDP link corresponding to the detected available network; and the multi-mode terminal performing data transmission for the PS service via one or more PDP links in activated PDP links.

Preferably, before performing, via the activated PDP link, data transmission for the PS service requested by a user, the method further includes: activating a PDP link corresponding to a preset network during a start-up process of the multi-mode terminal or when a request for the PS service is initiated.

Preferably, performing data transmission for the PS service via one or more PDP links in the activated PDP links includes: performing data transmission for the PS service carrying status information via one PDP link, which is suitable for performing data transmission for the PS service carrying status information, in the activated PDP links; or performing data transmission for the PS service not carrying the status information via a plurality of PDP links in the activated PDP links simultaneously.

Preferably, performing data transmission for the PS service not carrying the status information via a plurality of PDP links in the activated PDP links simultaneously includes: packetizing uplink data from the multi-mode terminal to a network side into a plurality of data packets which are in one-to-one correspondence with the plurality of PDP links, and distributing the plurality of data packets to corresponding PDP links to simultaneously transmit respective data packets to the network side via the plurality of PDP links; and/or depacketizing downlink data received via the plurality of PDP links from the network side, and transmitting the depacketized downlink data to an upper-layer application of the multi-mode terminal.

Preferably, the method further includes: establishing a one-to-many PDP link relationship of the plurality of PDP links; packetizing the uplink data from the multi-mode terminal to the network side into a plurality of data packets which are in one-to-one correspondence with the plurality of PDP links includes: receiving the uplink data sent from the upper-layer application of the multi-mode terminal via one PDP link corresponding to the plurality of PDP links recorded in the PDP link relationship, and packetizing the uplink data; and transmitting the depacketized downlink data to the upper-layer application of the multi-mode terminal includes: transmitting the depacketized downlink data to the upper-layer application of the multi-mode terminal via one PDP link corresponding to the plurality of PDP links recorded in the PDP link relationship.

Preferably, establishing the one-to-many PDP link relationship of the plurality of PDP links includes: establishing the one-to-many PDP link relationship of the plurality of PDP links by constructing a Virtual Private Network (VPN).

Preferably, during the data transmission for the PS service, the method further includes: when detecting that a network corresponding to an activated PDP link is unavailable, the multi-mode terminal deactivating the PDP link corresponding to the unavailable network.

According to another aspect of the present invention, an apparatus for switching a service of a multi-mode terminal is provided, the apparatus including: a transmission module configured to perform, via one activated Packet Data Protocol (PDP) link, data transmission for a Packet Switch (PS) service requested by a user; a detection module configured to detect an available network in a current network environment during the data transmission; and an activation module configured to activate a PDP link corresponding to the available network detected by the detection module; wherein the transmission module is further configured to perform data transmission for the PS service via one or more PDP links in activated PDP links.

Preferably, the activation module is further configured to: activate a PDP link corresponding to a preset network during a start-up process of the multi-mode terminal or when a request for the PS service is initiated.

Preferably, the transmission module includes: a first transmission module configured to perform data transmission for the PS service carrying status information via one PDP link, which is suitable for performing data transmission for the PS service carrying the status information, in the activated PDP links; and a second transmission module configured to perform data transmission for the PS service not carrying the status information via a plurality of PDP links in the activated PDP links simultaneously.

Preferably, the second transmission module includes: a packetizing module configured to packetize uplink data from the multi-mode terminal to a network side into a plurality of data packets which are in one-to-one correspondence with the plurality of PDP links and distribute the plurality of data packets to corresponding PDP links; and a depacketizing module configured to depacketize downlink data received via the plurality of PDP links from the network side and transmit the depacketized downlink data to an upper-layer application of the multi-mode terminal.

Preferably, the second transmission module further includes: an establishment module configured to establish a one-to-many PDP link relationship of the plurality of PDP links.

Preferably, the apparatus further including: a deactivation module configured to, when the detection module detects that a network corresponding to an activated PDP link is unavailable, deactivate the PDP link corresponding to the unavailable network.

Through the present invention, PDP links corresponding to a plurality of networks can be activated when data transmission for a PS service is performed, and a plurality of PDP links jointly upload and download data of the PS service so as to perform data transmission for the PS service using available networks in the current network, which solves the problem that the multi-mode terminal cannot implement high speed data transmission for the PS service by using network resources of multiple communication networks, and further achieves the effect of multi-network binding high speed data transmission for the PS service.

### Brief Description of the Drawings

Drawings, provided for further understanding of the present invention and forming a part of the specification, are used to explain the present invention together with embodiments of the present invention rather than to limit the present invention. In the drawings:
Fig. 1 is a flow chart of a method for switching a service of a multi-mode terminal according to an embodiment of the present invention;
Fig. 2 is a flow chart of a method for switching a service of a multi-mode terminal according to embodiment I of the present invention;
Fig. 3 is a schematic diagram of a multi-network integration network environment according to embodiment II of the present invention;
Fig. 4 is a structure diagram of an apparatus for switching a service of a multi-mode terminal according to an embodiment of the present invention;
Fig. 5 is a preferred structure diagram of an apparatus for switching a service of a multi-mode terminal according to an embodiment of the present invention;
Fig. 6 is a structure diagram of a transmission module according to an embodiment of the present invention;
Fig. 7 is a structure diagram of an apparatus for switching a service of a multi-mode terminal according to embodiment III of the present invention; and
Fig. 8 is a structure diagram of the inside of a PDP manager layer according to embodiment III of the present invention.

### Detailed Description of the Embodiments

The present invention is described below with reference to the accompanying drawings and embodiments in detail. Note that, the embodiments of the present invention and the features of the embodiments can be combined with each other if there is no conflict.

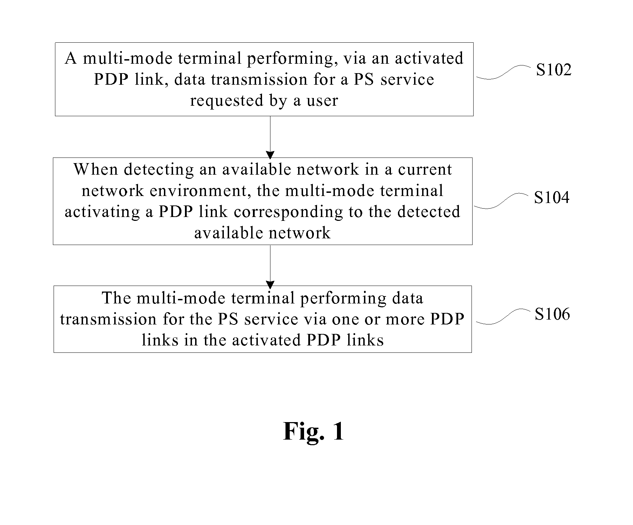

Fig. 1 is a flow chart of a method for switching a service of a multi-mode terminal according to an embodiment of the present invention. As shown in Fig. 1, the method includes the following steps (step S102 to step S106).

In step S102, a multi-mode terminal performs data transmission via one activated PDP link for a PS service requested by a user.

In a preferred implementation of the embodiments of the present invention, the PDP link used by the multi-mode terminal in step S102 can be activated during the start-up process, for example, when the multi-mode terminal starts up, i.e., in the start-up flow, the application processor (AP) of the multi-mode terminal can automatically initiate a PDP link activation request to the PDP manager layer (PML), and the PML activates a PDP link corresponding to a preset network according to a request issued by the current mobile network. Alternatively, the PDP link corresponding to the preset network can also be activated when the multi-mode terminal initiates a request for the PS service.

Preferably, the preset network can be set by referring to the network coverage. In practical applications, the above-mentioned preset network is mostly 3G network. Adopting a 3G network with broader coverage as the preset network can improve the reliability of the connections established for the PS service. Preferably, the preset network may also be set by the user according to the network environment, for example, if a user is in an area where networks such as 3G and WIFI, etc. cover simultaneously, the user can set WIFI as the preset network offering free WIFI connection in many environments, so as to reduce the expense of the user's PS service. By using the preset network set by the user, the user is able to set the preset network as needed to improve the flexibility and user experience of the PS service on the multi-mode terminal.

In step S104, when detecting an available network in a current network environment, the multi-mode terminal activates a PDP link corresponding to the detected available network.

In a preferred implementation of the embodiments of the present invention, the multi-mode terminal detects, in real time, available networks in the environment in which the multi-mode terminal is located, and when a new available network is detected, the multi-mode terminal activates a PDP link corresponding to the detected available network; and when it is detected that the network corresponding to a certain activated PDP link is unavailable, the PDP link corresponding to the unavailable network is deactivated. Through this preferred embodiment, the real-time detection and maintenance of the PDP link provides the multi-mode terminal with PDP links corresponding to multiple available networks in the network environment, enabling the multi-mode terminal to perform PS service data transmission using multiple networks simultaneously, so as to improve the data transmission speed of the PS service.

In step S106, the multi-mode terminal performs data transmission for the PS service via one or more PDP links in the activated PDP links.

In practical applications, different PS services have different requirements on the network, for example, some PS services with relatively strong real-time demand require the network delay to be as small as possible, while other PS services do not have particular requirements on the network delay, but have relatively high requirements on the reliability of data transmission. Therefore, one or more PDP links can be selected according to the type of a PS service to perform data transmission for the PS service.

In a preferred implementation of the embodiments of the present invention, as to a PS service carrying status information, the multi-mode terminal selects one PDP link which is suitable for performing data transmission for the PS service from the activated PDP links to perform data transmission for the PS service; and as to a PS service not carrying the status information, such as file download, the multi-mode terminal performs data transmission for the PS service via multiple PDP links in the activated PDP links simultaneously. Through this preferred embodiment, adopting different PDP link strategies for different service types improves the reliability of different types of PS services, and at the same time, performing data transmission for a PS service not carrying the status information using multiple PDP links achieves high speed uploads and downloads of data of the PS service in an environment where multiple types of networks coexist.

In view of the above-mentioned preferred embodiments, in a preferred implementation of the embodiments of the present invention, uplink and downlink data of multiple PDP links can be managed. Specifically, the uplink data from the multi-mode terminal to the network side are packetized into a plurality of data packets which are in one-to-one correspondence with the plurality of PDP links, and the plurality of data packets are distributed to corresponding PDP links to transmit respective data packets to the network side via the plurality of PDP links at the same time; and/or the downlink data received via the plurality of PDP links from the network side are depacketized, and the depacketized downlink data are transmitted to an upper-layer application of the multi-mode terminal. Through this preferred embodiment, a plurality of PDP links can simultaneously upload and download data of the PS service, which takes full advantage of the network resources of multiple available networks so as to provide users with a PS service with high speed data transmission.

In a preferred implementation of the embodiments of the present invention, in order to manage the uplink and downlink data of a plurality of PDP links, a one-to-many PDP link relationship of the plurality of PDP links can be established, and in practical applications, a one-to-many PDP link relationship table can be established to record the above-mentioned one-to-many PDP link relationship. Specifically, one PDP link can be selected from the plurality of PDP links to receive data from the upper-layer application of the multi-mode terminal, and then the received data are packetized and distributed to each of the plurality of PDP links, and then uploaded to the network side; the downlink data received by the plurality of PDP links from the network side are depacketized, and the depacketized data are uploaded to the upper-layer application via one PDP link selected from the plurality of PDP links. Preferably, the selected PDP link may be the PDP link corresponding to the preset network (e.g., the PDP link corresponding to the 3G network), and the multi-mode terminal maintains the one-to-many PDP link relationship in real time, and if the network corresponding to the selected PDP link is unavailable, the multi-mode terminal will deactivate the PDP link and reselect one PDP link from the available PDP links to replace that PDP link. This preferred embodiment achieves high speed uploads and downloads of the data of a PS service.

In view of the above-mentioned preferred embodiment, each PDP link corresponds to one IP address, the establishment of the one-to-many PDP link relationship of the plurality of PDP links may be implemented by establishing a one-to-many relationship among IP addresses corresponding to PDP links. In practical applications, the above-mentioned one-to-many PDP link relationship may be established via, but not limited to, a virtual private network (VPN) to manage the one-to-many relationship among the IP addresses. The one-to-many PDP link relationship can be managed via a VPN, in order to achieve a plurality of PDP links simultaneously uploading and downloading data of the PS service to provide users with high speed PS service.

Through the embodiments of the present invention, multiple networks and multiple PDP links are adopted to upload and download data of a PS service, so as to perform data transmission for the PS service using available networks in the current network simultaneously. Besides, the PDP links in the networks can be maintained and updated in real time, new available networks in the current environment can immediately join in the PS service data transmission, and when a network used by the PS service is unavailable, the data of the PS service can be transmitted through other networks, thus ensuring the high speed, stability, and continuity of the data transmission for the PS service, providing users with a PS service with high data transmission speed, and improving the user experience of the multi-mode terminal.

Description is made below to specific embodiments.

### Embodiment I

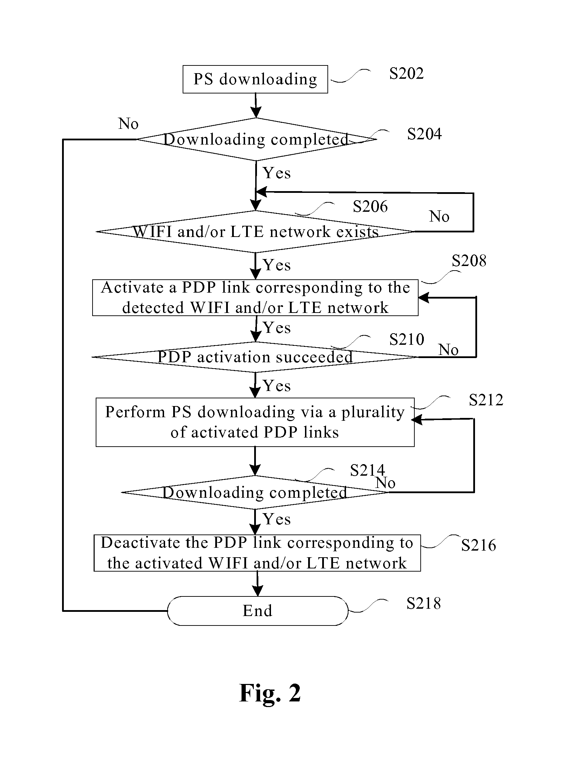

Fig. 2 is a flow chart of a method for switching a service of a multi-mode terminal according to embodiment I of the present invention. As shown in Fig. 2, the method includes the following steps (step S202 to step S218).

In step S202, a multi-mode terminal performs PS downloading.

In step S204, the multi-mode terminal judges whether the PS downloading has completed, if the judgment result is yes, step S218 is executed, and if the judgment result is no, then step S206 is executed.

In step S206, network detection is initiated to check if there is a WIFI and/or LTE network, if a WIFI and/or LTE network is not detected, then proceeding with step S206, and if a WIFI and/or LTE network is detected, then step S208 is executed.

In step S208, a PDP link corresponding to the detected WIFI and/or LTE network is activated.

In step S210, it is judged whether the above-mentioned activation has succeeded, if the judgment result is no, then return to step S208, and if the judgment result is yes, then step S212 is executed.

In step S212, PS downloading is performed via a plurality of activated PDP links.

In step S214, it is judged whether the above-mentioned PS downloading has completed, if the judgment result is no, then return to step S212, and if the judgment result is yes, then step S216 is executed.

In step S216, the PDP link corresponding to the activated WIFI and/or LTE network is deactivated.

In step S218, the PS downloading is completed.

In the embodiment of the present invention, network detection is initiated during PS downloading. The multi-mode terminal activates the PDP link corresponding to the detected network to perform PS downloading, and when the detected network is unavailable, the multi-mode terminal deactivates the PDP link corresponding to the unavailable network, and updates and maintains in real time the PDP links used for PS downloading.

### Embodiment II

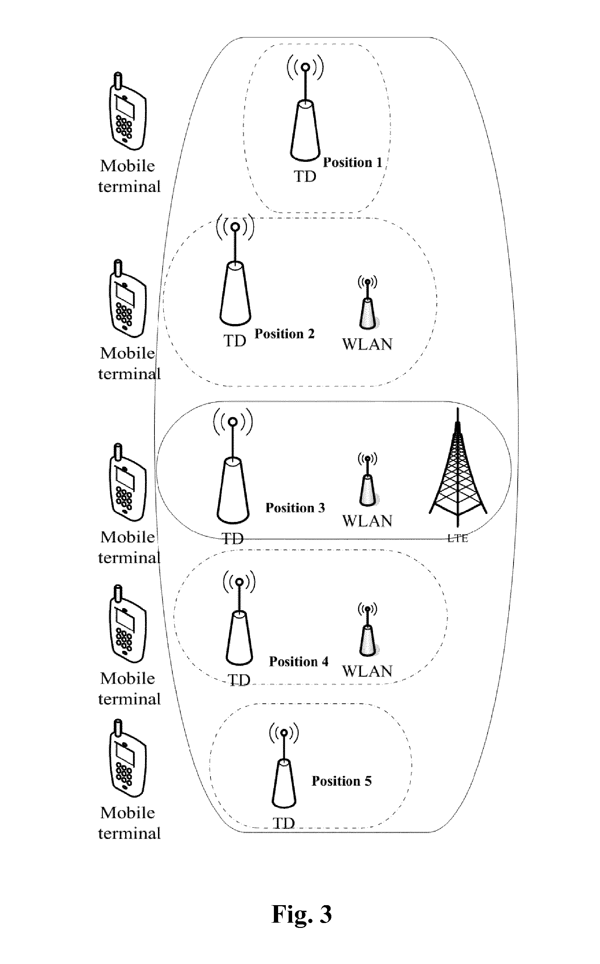

Fig. 3 is a schematic diagram of a multi-network integration network environment according to embodiment II of the present invention. The method for switching a service of a multi-mode terminal of embodiment II of the present invention is described in conjunction with Fig. 3.

The terminal starts up and activates a default PDP link based on TD or EDGE according to the coverage of the 3G network. The user operates on an application and initiates a PS downloading request.

The multi-mode terminal is at position 1, where only the common network coverage area of the 3G network exists, and PS downloading is performed by conducting data transmission via the 3G network.

The multi-mode terminal moves to position 2, where it enters into the TD and WIFI network coverage area. The multi-mode terminal keeps the PDP link in the current 3G network and activates another PDP link via a WLAN network.

At this moment, for the multi-mode terminal, there are two PDP links, i.e. the VPN needs to manage the two IP addresses assigned by GGSN in two networks. The multi-mode terminal packetizes the downlink data issued by the application and issues the packets to the two IP addresses respectively, and the PDP links in the two networks perform, synchronously and in real time, PS downloading according to the data node issued by the application. Data of the PS service returned by the network are respectively received at the two IP addresses, the multi-mode terminal depacketizes the received data and sends data obtained by the depacketization to the application through the IP address corresponding to an activated default PDP link using a VPN tunnel.

The multi-mode terminal moves to position 3, where three networks TD, WIFI, and LTE coexist in the environment, and the multi-mode terminal activates another PDP link based on the LTE network.

The multi-mode terminal moves to position 4, where the network environment switches to having TD and WIFI only. Since the LTE network coverage generally focuses on some of the large and medium-sized cities, the terminal may easily move out of the LTE network coverage area in the process of moving. The multi-mode terminal actively issues a deactivation request to the RIL to release the PDP link corresponding to the LTE network, refreshes the maintained PDP, and interrupts the data transmission on this PDP link.

The terminal moves to position 5, where the network environment only has the 3G network coverage left, and the PS downloading restores to the initial state and PS data transmission is performed via the default PDP link.

Through the embodiments of the present invention, the multi-mode terminal performs PS downloading in the process of moving; regardless of whether one or more of the EDGE, TD, WIFI, LTE networks exist in the network environment, the multi-mode terminal takes advantage of all available networks at the current position to the greatest degree, uses the mechanism of separately establishing links for new PDP links without disconnecting the current PDP link, and first connecting and then transmitting, and performs packetizing and depacketizing processing on the uplink and downlink data respectively. This achieves seamless switchover in multi-network integration and enables high speed and continuous PS downloading.

According to an embodiment of the present invention, an apparatus for switching a service of a multi-mode terminal is also provided to implement the above-mentioned method provided in the embodiments of the present invention.

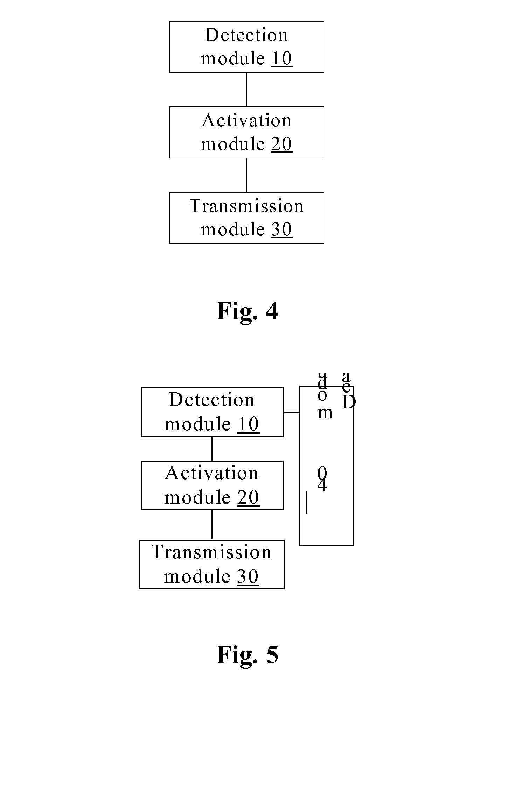

Fig. 4 is a structure diagram of an apparatus for switching a service of a multi-mode terminal according to an embodiment of the present invention. As shown in Fig. 4, the apparatus includes: a detection module **10,** an activation module **20** and a transmission module **30.** The detection module **10** is configured to detect an available network in a current network environment; the activation module **20** is coupled with the detection module **10** and is configured to activate a PDP link corresponding to the available network detected by the detection module **10;** and the transmission module **30** is configured to perform data transmission for a PS service requested by a user via one PDP link activated by the activation module **20,** and is further configured to, after the detection of the detection module **10,** perform data transmission for the PS service via one or more PDP links in the PDP links currently activated by the activation module **20.**

Through the embodiments of the present invention, the detection module **10** detects in real time available networks in the environment where the multi-mode terminal is located, the activation module **20** activates the PDP links corresponding to the available networks detected by the detection module **10,** and the transmission module **30** takes different transmission strategies for different PS services according to the type of the PS services, thus ensuring the reliability of data transmission for different PS services. For a PS service not carrying status information, multiple PDP links are simultaneously used to perform data transmission for the PS service, and available networks in the environment where the multi-mode terminal is located are fully used, thereby increasing the upload and download speeds of the data of the PS service, and significantly improving the user experience of the multi-mode terminal.

In practical applications, the above-mentioned activation module **20** is further configured to activate a PDP link corresponding to a preset network during a start-up process of the multi-mode terminal or when a request for the PS service is initiated. Preferably, the preset network can be set by referring to the network coverage, and in practical applications, the above-mentioned preset network is mostly 3G network. Adopting a 3G network with broader coverage as the preset network can improve the reliability of the connections established for the PS service. Preferably, the above-mentioned preset network can also be set by the user according to the network environment. By using the preset network set by the user, the user is able to set the preset network as needed to improve the flexibility and user experience of the PS service on the multi-mode terminal.

In a preferred implementation of the embodiments of the present invention, in order to maintain and update in real time a plurality of activated PDP links, as shown in Fig. 5, the apparatus may further include: a deactivation module **40** configured to, when the detection module **10** of the multi-mode terminal detects that a network corresponding to an activated PDP link is unavailable, deactivate the PDP link corresponding to the unavailable network. Through this preferred embodiment, the real-time maintenance and update of the plurality of PDP links ensures the continuity and reliability of the PS service.

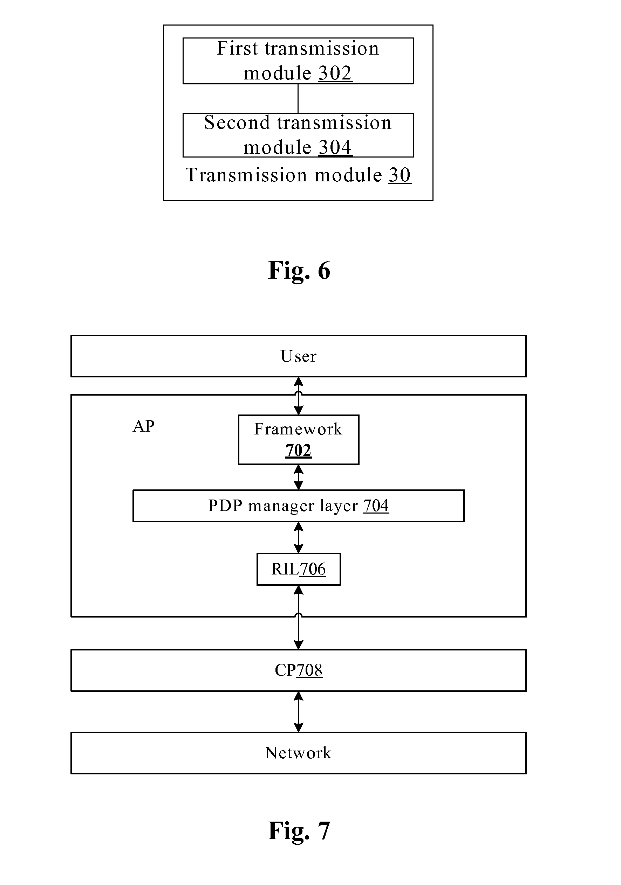

In practical applications, different PS services have different requirements on the network, for example, some PS services with relatively strong real-time demand require the network delay to be as small as possible, while other PS services do not have particular requirements on the network delay, but have relatively high requirements on the reliability of data transmission. Therefore, different data transmission strategies can be adopted for different PS services according to the type of the PS services. In a preferred implementation of the embodiments of the present invention, as shown in Fig. 6, the above-mentioned transmission module **30** can include: a first transmission module **302** configured to perform data transmission for the PS service carrying the status information via one PDP link, which is suitable for performing data transmission for the PS service carrying the status information, in the activated PDP links; and a second transmission module **304** configured to perform data transmission for the PS service not carrying the status information via a plurality of PDP links in the activated PDP links simultaneously. Through this preferred embodiment, adopting different transmission strategies for the data of different PS services improves the reliability of the PS services, and transmitting the data of a PS service not carrying the status information via a plurality of PDP links simultaneously improves the upload and download speeds of the data of the PS service.

In view of the above-mentioned preferred embodiment, the second transmission module **304** may include: a packetizing module configured to packetize the uplink data from the multi-mode terminal to a network side into a plurality of data packets which are in one-to-one correspondence with the plurality of PDP links and distribute the plurality of data packets to corresponding PDP links; and a depacketizing module configured to depacketize downlink data received via the plurality of PDP links from the network side and transmit the depacketized downlink data to an upper-layer application of the multi-mode terminal. Through this preferred embodiment, a plurality of PDP links can simultaneously upload and download data of the PS service, which takes full advantage of the network resources of multiple available networks so as to provide users with a PS service with high data transmission speed.

In a preferred implementation of the embodiments of the present invention, in order to manage the uplink and downlink data of a plurality of PDP links, the second transmission module 304 may further include: an establishment module configured to establish a one-to-many PDP link relationship of the plurality of PDP links. Under the management of the one-to-many PDP link relationship established by the establishment module, the transmission module 30 selects one PDP link from the plurality of PDP links to packetize the received data of the upper-layer application, and distribute the obtained packets to the plurality of PDP links to be uploaded to the network side; and to depacketize the downlink data received from the network side uploaded by the plurality of PDP links, and upload the depacketized data to the upper-layer application. In this preferred embodiment, managing a plurality of PDP links achieves high speed uploads and downloads of the data of a PS service.

Description is made below to specific embodiments.

### Embodiment III

Fig. 7 is a structure diagram of an apparatus for switching a service of a multi-mode terminal according to embodiment III of the present invention. As shown in Fig. 7, the entire system architecture mainly includes: a framework **702,** a PDP manager layer (PML) **704,** a radio interface layer (RIL) **706,** and a communication processor (CP) **708.**

The framework **702** is mainly responsible for receiving and processing the request message issued by a user operated application and judging whether it is a PS service request, if it is, sending the request message to the PDP manager layer **704** for processing and PS data interaction, otherwise, directly sending the request message to the radio interface layer **706** for processing.

The PDP manager layer **704** is located between the framework **702** and the radio interface layer **706,** and its main function is to process, during start-up, a default PDP activation request message issued by the framework **702,** and to manage and send the PDP activation request message according to the TD, WIFI, and LTE network environment. Meanwhile, a VPN is constructed in the PDP manager layer **704** and set for data transmission management, there are specifically the following two cases:
(1) For PS services carrying status information, when the PDP manager layer **704** receives this type of PDP activation request, the PDP manager layer **704** selects the best network from all the currently available networks, with different services being corresponding to different PDP links, and performs data transmission, with PDP links of the framework **702** being one-to-one corresponding to the PDP links in the underlying layer;
(2) For PS services not carrying the status information, such as file downloading, the upper layer uses the default PDP link, and the underlying layer corresponds to multiple PDP links based on the current network environment, and the PDP manager layer **704** performs one-to-many management on the IP addresses via a VPN, packetizes and issues the received data of the upper layer, and depacketizes and sends the received data uploaded by the underlying layer.

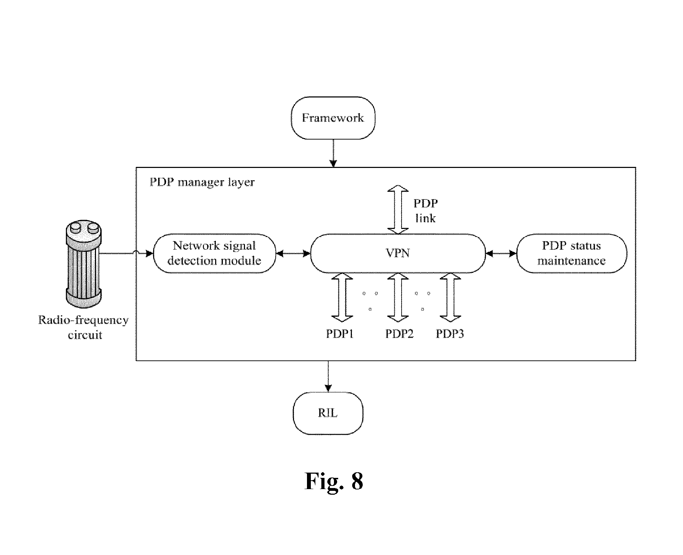

Meanwhile, the PDP manager layer **704** also integrates a network detection mechanism to detect in real time the TD/WIFI/LTE network signal received by the radio-frequency circuit of the terminal, so as to use all available networks for multi-network binding high speed download during PS downloading. Apart from the request for the first default PDP link which is initiatively issued by the start-up process, the activation PDP link requests after the WIFI or LTE network is detected are all independently completed by the PDP manager layer and the network status thereof is maintained in real time. The internal structure of the PDP manager layer **704** is as shown in Fig. 8.

The radio interface layer **706** converts the PDP activation request message issued by the PDP manager layer **704** into a specific AT command and issues same to the CP in order to activate the corresponding PDP link.

The communication processor **708** mainly achieves the 3GPP protocol support required by 3G terminals during the service process, and directly interacts with the air-interface network.

Through the embodiments of the present invention, a default PDP link is activated at startup through the TD or EDGE network for PS service data transmission, when the multi-mode terminal moves to a WIFI or LTE coverage area, the PDP manager layer **704** respectively activates corresponding PDP links based on the WIFI or LTE network, and during the PS downloading, the PDP manager layer **704** performs data transmission via all PDP links synchronously and in real time, and while data are uploaded, the PDP manager layer **704** will depacketize the received PS data and send the data to an AP via the unique default PDP link. High speed PS downloading in case that a variety of networks coexist is achieved, and the user experience of the multi-mode terminal is improved.

From the above description, it can be seen that the present invention achieves the following technical effects: a variety of networks and multiple PDP links are adopted to upload and download the data of a PS service at the same time, so that available networks in the current network can be used for PS service data transmission to provide users with a PS service with high data transmission speed. Also, multiple PDP links in a variety of networks can be maintained and updated in real time, new available networks in the current environment can immediately join in the PS service data transmission, and when the network used by the PS service is unavailable, the data of the PS service can be transmitted through other networks, thus ensuring the high speed, stability, and continuity of the PS service data transmission, and improving the user experience of the multi-mode terminal.

Obviously, those skilled in the art should know that each of the above-mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferred embodiments of the present invention, which are not used to restrict the present invention, and for those skilled in the art, the present invention may have various changes and variations. Any amendments, equivalent substitutions, improvements, etc. made within the principle of the present invention are all included in the scope of the protection of the present invention.

## Claims

1. A method for switching a service of a multi-mode terminal, **characterized by** comprising:
a multi-mode terminal performing, via one activated Packet Data Protocol (PDP) link, data transmission for a Packet Switch (PS) service requested by a user;
when detecting an available network in a current network environment, the multi-mode terminal activating a PDP link corresponding to the detected available network; and
the multi-mode terminal performing data transmission for the PS service via one or more PDP links in activated PDP links.

2. The method according to claim 1, **characterized in that** before performing, via the activated PDP link, data transmission for the PS service requested by a user, the method further comprises:
activating a PDP link corresponding to a preset network during a start-up process of the multi-mode terminal or when a request for the PS service is initiated.

3. The method according to claim 1, **characterized in that** performing data transmission for the PS service via one or more PDP links in the activated PDP links comprises:
performing data transmission for the PS service carrying status information via one PDP link, which is suitable for performing data transmission for the PS service carrying status information, in the activated PDP links; or
performing data transmission for the PS service not carrying the status information via a plurality of PDP links in the activated PDP links simultaneously.

4. The method according to claim 3, **characterized in that** performing data transmission for the PS service not carrying the status information via a plurality of PDP links in the activated PDP links simultaneously comprises:
packetizing uplink data from the multi-mode terminal to a network side into a plurality of data packets which are in one-to-one correspondence with the plurality of PDP links, and distributing the plurality of data packets to corresponding PDP links to simultaneously transmit respective data packets to the network side via the plurality of PDP links; and/or
depacketizing downlink data received via the plurality of PDP links from the network side, and transmitting the depacketized downlink data to an upper-layer application of the multi-mode terminal.

5. The method according to claim 4, **characterized in that**
the method further comprises: establishing a one-to-many PDP link relationship of the plurality of PDP links;
packetizing the uplink data from the multi-mode terminal to the network side into a plurality of data packets which are in one-to-one correspondence with the plurality of PDP links comprises: receiving the uplink data sent from the upper-layer application of the multi-mode terminal via one PDP link corresponding to the plurality of PDP links recorded in the PDP link relationship, and packetizing the uplink data; and
transmitting the depacketized downlink data to the upper-layer application of the multi-mode terminal comprises: transmitting the depacketized downlink data to the upper-layer application of the multi-mode terminal via one PDP link corresponding to the plurality of PDP links recorded in the PDP link relationship.

6. The method according to claim 5, **characterized in that** establishing the one-to-many PDP link relationship of the plurality of PDP links comprises:
establishing the one-to-many PDP link relationship of the plurality of PDP links by constructing a Virtual Private Network (VPN).

7. The method according to any one of claims 1 to 6, **characterized in that** during the data transmission for the PS service, the method further comprises:
when detecting that a network corresponding to an activated PDP link is unavailable, the multi-mode terminal deactivating the PDP link corresponding to the unavailable network.

8. An apparatus for switching a service of a multi-mode terminal, **characterized by** comprising:
a transmission module configured to perform, via one activated Packet Data Protocol (PDP) link, data transmission for a Packet Switch (PS) service requested by a user;
a detection module configured to detect an available network in a current network environment during the data transmission; and
an activation module configured to activate a PDP link corresponding to the available network detected by the detection module;
wherein the transmission module is further configured to perform data transmission for the PS service via one or more PDP links in activated PDP links.

9. The apparatus according to claim 8, **characterized in that** the activation module is further configured to:
activate a PDP link corresponding to a preset network during a start-up process of the multi-mode terminal or when a request for the PS service is initiated.

10. The apparatus according to claim 8, **characterized in that** the transmission module comprises:
a first transmission module configured to perform data transmission for the PS service carrying status information via one PDP link, which is suitable for performing data transmission for the PS service carrying the status information, in the activated PDP links; and
a second transmission module configured to perform data transmission for the PS service not carrying the status information via a plurality of PDP links in the activated PDP links simultaneously.

11. The apparatus according to claim 10, **characterized in that** the second transmission module comprises:
a packetizing module configured to packetize uplink data from the multi-mode terminal to a network side into a plurality of data packets which are in one-to-one correspondence with the plurality of PDP links and distribute the plurality of data packets to corresponding PDP links; and
a depacketizing module configured to depacketize downlink data received via the plurality of PDP links from the network side and transmit the depacketized downlink data to an upper-layer application of the multi-mode terminal.

12. The apparatus according to claim 11, **characterized in that** the second transmission module further comprises:
an establishment module configured to establish a one-to-many PDP link relationship of the plurality of PDP links.

13. The apparatus according to any one of claims 8 to 12, **characterized by** further comprising:
a deactivation module configured to, when the detection module detects that a network corresponding to an activated PDP link is unavailable, deactivate the PDP link corresponding to the unavailable network.
